# EUROPEAN PATENT SPECIFICATION

(11) **EP 2 571 243 B1**
(45) Date of publication and mention of the grant of the patent: **28.08.2019**
(21) Application number: 12181985.8
(22) Date of filing: 28.08.2012
(51) Int. Cl.: H04N 1/387

(54) **Image forming apparatus**
Bilderzeugungsvorrichtung
Appareil de formation d'images

(30) Priority: 16.09.2011 JP 2011203573
(43) Date of publication of application: 20.03.2013
(73) Proprietor: Ricoh Company, Ltd., Tokyo 143-8555 (JP)
(72) Inventor: Yamaguchi, Akinori, Tokyo, 143-8555 (JP); Ikeda, Hiroaki, Tokyo, 143-8555 (JP); Hayashi, Masayuki, Tokyo, 143-8555 (JP); Komai, Kunihiro, Tokyo, 143-8555 (JP); Tsuchiya, Fuminori, Tokyo, 143-8555 (JP); Takahashi, Motoyoshi, Tokyo, 143-8555 (JP); Shirasaki, Yoshinori, Tokyo, 143-8555 (JP); Miyadera, Tatsuya, Tokyo, 143-8555 (JP)
(74) Representative: SSM Sandmair

(56) References cited:
- JP-A- 2004 163 547
- US-A- 5 708 919
- US-A1- 2010 119 273

## Description

### CROSS-REFERENCE TO RELATED APPLICATIONS

The present application claims priority of Japanese Patent Application No. 2011-203573 filed in Japan on September 16, 2011.

### BACKGROUND OF THE INVENTION

### 1. Field of the Invention

The present invention relates to an image forming apparatus having a color deviation correcting function and a toner consumption amount calculating function.

### 2. Description of the Related Art

As for image forming apparatuses such as full-color printers and full-color copying machines, there is an image forming apparatus of a tandem system. In the image forming apparatus of the tandem system, four image forming units including photosensitive drums are arranged on a conveying belt for conveying a recording sheet along a conveyance direction of the recording sheet. The image forming units form toner images of four colors of yellow (Y), magenta (M), cyan (C), and black (K) individually. Furthermore, in the image forming apparatus, the image forming units form toner images of corresponding colors on the photosensitive drums corresponding to the respective colors based on pieces of image data of the respective colors; and then, transfer the toner images of the respective colors onto the recording sheet that is conveyed by the conveying belt in a superimposed manner so as to form a color image. Furthermore, there is another image forming apparatus of the tandem system in which toner images of respective colors are superimposed on an intermediate transfer belt so as to form a color image, and the color image is transferred onto a recording sheet.

In the image forming apparatuses of the tandem system, the toner images of the respective colors need to be transferred onto the recording sheet so as not to generate color deviation (positional deviation) among them in order to form a color image on the recording sheet with high accuracy. However, color deviation is generated due to various variation factors such as mounting errors of exposing units formed by light emitting diode array (LEDA) heads or the like for exposing surfaces of photosensitive drums to form electrostatic latent images; deviation of LED elements constituting the LEDA from the linear array; mounting errors of the image forming units including the photosensitive drums; rotation speed errors of the photosensitive drums; and fine changes of distances between the image forming units and deformation of the image forming units themselves due to environmental change of ambient temperature and the like.

The image forming apparatus of the tandem system has a function of reducing color deviation in the following manner in many cases. That is, in the image forming apparatus of the tandem system, images of predetermined registration patterns (color deviation detection patterns) are formed on a conveying belt or an intermediate transfer belt with toners of respective colors. Then, the registration patterns are detected by photoelectric sensors so as to calculate deviation amounts of other three colors on the basis of K, for example; the deviation amounts occurring by factors including registration deviation in the main scanning direction, registration deviation in the sub scanning direction, main scanning magnification deviation, and skew deviation. Thereafter, each deviation correction amount is calculated from each calculated deviation value and feedback correction is performed to eliminate each deviation. With this, color deviation is reduced.

In the color deviation correction, it is known that color deviation in a diagonal direction (tilt direction) between the main scanning direction as a width direction orthogonal to a transportation direction of the conveying belt or the intermediate transfer belt and the sub scanning direction that is the same direction as the transportation direction is corrected electrically in the following manner.

That is to say, when pieces of image data for a plurality of lines are written into line memories (line buffers) from an image memory; and images are formed on the photosensitive drums based on the pieces of image data of the respective colors that are stored in the line memories, color deviations are corrected in the following manner. That is, color deviation correction amounts are calculated based on positional information of the registration patterns detected by the photoelectric sensors. Then, writing/reading of the image data for the plurality of lines into/from the line memories are controlled based on the color deviation correction amounts such that the toner images formed on the photosensitive drums shift in a reversal direction to the color deviation.

In this case, when each line memory has a storage capacity for N lines (for example, five lines), color deviation can be corrected to a range in which a color deviation amount of a colored toner image with respect to a toner image of K in the diagonal direction is ±(N-1) lines (for example, ±4 lines) (see, Japanese Patent Application Laid-open No. 2004-163547 (paragraph [0007])).

Examples of the color deviation in the diagonal direction (tilt direction) include skew generated because the LEDA is mounted in the tilt direction and surge generated because the LED elements constituting the LEDA are deviated from the linear array. These deviations can be corrected with the above-described method. The skew and the surge are referred to as skew collectively in the following description.

Furthermore, in the image forming apparatus, it is known that the number of print pixels as pixels to which toner adheres is counted and a toner consumption amount is obtained based on an integrated value thereof. However, actually, when toner adheres to a certain pixel, adhesion manner of the toner is influenced by states of peripheral pixels and is not constant. Accordingly, the toner consumption amount is not always proportional to the number of print pixels and the toner consumption amount cannot be obtained from the integrated value of the number of print pixels simply.

As a technique for solving the problem, there is a toner consumption amount calculating method with which calculation accuracy of a toner consumption amount is improved in the following manner (Japanese Patent Application Laid-open No. 2007-78794). That is, in the toner consumption amount calculating method, influence due to states of peripheral pixels are taken into consideration by obtaining a toner consumption amount on a target print pixel in a two-dimensional array state of print pixels, for example, the toner consumption amount being the number of pint pixels present in 3 × 3 pixels centered on the target pixel. Note that in order to obtain the number of print pixels present in 3 × 3 pixels, a line memory for three lines is needed.

It is considered that the image forming apparatus is made to have the above-described skew correcting function and toner consumption amount calculating function. However, in this case, when a maximum skew correction range is assumed to N lines (N is an integer of equal to or more than 2), a line memory for (N+1) lines is needed for storing image data for skew correction. Furthermore, when image data to be referred to when a toner consumption amount is calculated is assumed to L lines (L is an integer of equal to or more than 2), a line memory for L lines is needed. Therefore, if a skew correction range is tried to be enlarged or toner consumption amount calculation accuracy is tried to be improved, there arises a problem that a necessary amount of line memories is much increased, resulting in increase in cost.

Document US 2010/0119273 A1 discloses an image forming apparatus including a skew correction unit. A correction pattern formed of toner image is formed on an endless belt. The skew obtaining unit obtains a skew of the toner image based on a detection result of the correction pattern. The skew correction unit corrects an image forming position of the toner image on an image carrying member using correction data prepared from the obtained skew for the correction pattern.

### SUMMARY OF THE INVENTION

The invention has been made in order to solve the above problem. An object is to make it possible to calculate a toner consumption amount without using a memory dedicated to calculation of the toner consumption amount in an image forming apparatus; the image forming apparatus having a function of correcting skew by controlling writing/reading of image data for a plurality of lines into/from a memory based on a previously calculated skew correction amount and a function of calculating the toner consumption amount of a pixel to which toner adheres among pixels of the image data stored in the memory with reference to pixels on a plurality of peripheral lines.

An image forming apparatus includes: a skew correcting unit; a toner consumption amount calculating unit; and a memory assigning unit. The skew correcting unit corrects skew by controlling writing/reading of image data for a plurality of lines into/from a memory based on a skew correction amount that has been calculated previously. The toner consumption amount calculating unit refers to pixels on a plurality of peripheral lines among pixels of the image data stored in the memory when a toner consumption amount of a pixel to which toner adheres is calculated. The memory assigning unit assigns a capacity not used for skew correction on the memory that is mounted for the skew correcting unit to the toner consumption amount calculating unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a view illustrating the entire configuration of an image forming apparatus according to a first embodiment;
FIG. 2 is a functional block diagram illustrating the image forming apparatus in the first embodiment;
FIG. 3 is a flowchart illustrating processing of selecting a memory to be used when the image forming apparatus in the first embodiment calculates a toner consumption amount;
FIGS. 4A and 4B are views illustrating a state where an excess region of a line memory for skew correction is assigned to calculation of the toner consumption amount;
FIGS. 5A to 5D are views illustrating a state where a line memory of color on which skew correction is not performed is assigned to calculation of toner consumption amounts;
FIGS. 6A and 6B are views illustrating a state where an excess region is assigned to calculation of the toner consumption amount when image data of two bits per pixel is stored in the line memory for skew correction that is mounted on an assumption that image data of four bits per pixel at maximum is stored;
FIGS. 7A to 7D are views for explaining an operation of calculating the toner consumption amount using a region of the line memory for skew correction after the skew correction; and
FIG. 8 is a view illustrating the entire configuration of an image forming apparatus according to a second embodiment.

### DETAILED DESCRIPTION OF THE PREFERRED EMBODIMENTS

Hereinafter, embodiments are described with reference to the drawings.

### First Embodiment

### Entire Configuration of Image Forming Apparatus

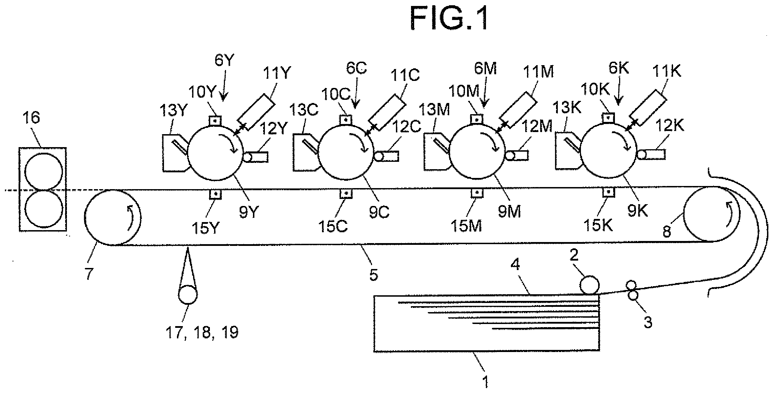

FIG. 1 is a view illustrating the entire configuration of the image forming apparatus according to a first embodiment.

The image forming apparatus has a configuration in which image forming units of respective colors are arranged along a conveying belt as an endless moving unit, and is of an image forming apparatus of a so-called tandem system. That is to say, a plurality of image forming units (electrophotography processing units) 6K, 6M, 6C, and 6Y are arranged in this order from the upstream side in a conveyance direction of a conveying belt 5 along the conveying belt 5. The conveying belt 5 conveys a recording sheet 4 that is separated and fed by a paper feeding roller 2 and separating rollers 3 from a paper feed tray 1.

These plurality of image forming units 6K, 6M, 6C, and 6Y have a common inner configuration other than a point that colors of toner images to be formed are different from one another. The image forming unit 6K forms an image of black, the image forming unit 6M forms an image of magenta, the image forming unit 6C forms an image of cyan, and the image forming unit 6Y forms an image of yellow.

In the following description, the image forming unit 6K is described in detail. The configurations of other image forming units 6M, 6C, and 6Y are the same as that of the image forming unit 6K; and constituent elements of the image forming units 6M, 6C, and 6Y are illustrated while reference numerals distinguished by M, C, and Y denote them instead of K denoting constituent components of the image forming unit 6K only and descriptions thereof are omitted.

The conveying belt 5 is an endless belt wound around a driving roller 7 and a driven roller 8 that are driven rotationally. The driving roller 7 is driven rotationally by a driving motor (not illustrated). The driving motor, the driving roller 7, and the driven roller 8 function as a driving unit that moves the conveying belt 5 as an endless moving unit.

The image forming unit 6K is constituted by a photosensitive drum 9K as a photosensitive element, a charger 10K arranged around the photosensitive drum 9K, an LEDA head 11K, a developing unit 12K, a photosensitive-element cleaner (not illustrated), a neutralizing unit 13K, and the like. The LEDA heads 11K, 11M, 11C, and 11Y are configured to expose the image forming units 6K, 6M, 6C, and 6Y, respectively.

When an image is formed, the recording sheet 4 housed in the paper feed tray 1 is fed in the order from an uppermost sheet and is adsorbed to the conveying belt 5 with an electrostatic adsorption effect so as to be driven rotationally. Furthermore, the recording sheet 4 is conveyed to the first image forming unit 6K by the conveying belt 5, and a toner image of black is transferred onto the recording sheet 4. That is to say, the toner image of black is transferred by a transfer unit 15K at a position (transfer position) at which the photosensitive drum 9K and a transfer sheet on the conveying belt 5 make contact with each other, so that an image of black is formed on the recording sheet 4.

On the photosensitive drum 9K which has performed transferring, unnecessary toner remained on a drum surface is cleaned by the photosensitive-element cleaner and the recording sheet 4 is ready for image formation of a subsequent color. In this manner, the recording sheet 4 onto which the toner image of black has been transferred by the image forming unit 6K is conveyed to the image forming unit 6M by the conveying belt 5. Also on the image forming unit 6M, a toner image formed on a photosensitive drum 9M is transferred onto the recording sheet 4 in a superimposed manner as in the case of the image forming unit 6K. The recording sheet 4 is further conveyed to the image forming unit 6C and the image forming unit 6Y, and formed toner images are transferred onto the recording sheet 4 in the same manner as described above. With this, a color image is formed. The recording sheet 4 that has passed through the image forming unit 6Y and on which the color image has been formed is separated from the conveying belt 5, the image is fixed by a fixing unit 16, and then, the recording sheet 4 is discharged.

In addition, the image forming apparatus has a function of correcting color deviation in the following manner. That is, the image forming units 6K, 6M, 6C, and 6Y of the respective colors form images of predetermined registration patterns with toners of the colors (K, M, C, Y) on the conveying belt 5. Then, the registration patterns are detected by photoelectric sensors 17, 18, and 19, so that skew correction amounts among the respective colors are calculated and color deviation is corrected. Details of the color deviation correcting function is generally known (for example, Japanese Patent Application Laid-open No. 2004-163547 and Japanese Patent Application Laid-open No. 2007-108283); and description thereof is omitted.

### Functional Block of Image Forming Apparatus

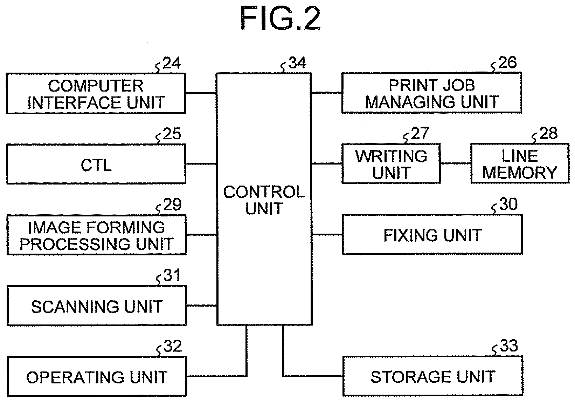

FIG. 2 is a functional block diagram illustrating the image forming apparatus in the embodiment.

The image forming apparatus includes a computer interface unit 24, a controller (CTL) 25, a print job managing unit 26, a writing unit 27, a line memory 28, an image forming processing unit 29, a fixing unit 30, a scanning unit 31, an operating unit 32, a storage unit 33, and a control unit 34.

The computer interface unit 24 performs communication with a terminal device (not illustrated) such as a personal computer that requests the image forming apparatus to perform printing. The CTL 25 transmits image data relating to the print request transmitted from the terminal device to the control unit 34. The print job managing unit 26 manages printing order of print jobs requested to the image forming apparatus.

The writing unit 27 converts image data transmitted from the CTL 25 to a signal for making the LEDA heads 11K, 11M, 11C, and 11Y emit light so as to turn on the LEDA heads 11K, 11M, 11C, and 11Y and expose the photosensitive drums 9K, 9M, 9C, and 9Y. The line memory 28 is a buffer memory that stores therein the image data transmitted from the CTL 25 temporarily and has a capacity of storing image data for the number of lines in accordance to a supposed maximum skew correction amount.

The writing unit 27 and the control unit 34 correct skew with generally known image processing of switching a reading address in accordance with a skew correction amount when the writing unit 27 makes the LEDA heads 11K, 11M, 11C, and 11Y emit light; and when the control unit 34 reads image data written into the line memory 28. That is to say, the control unit 34 and the writing unit 27 correspond to skew correcting units according to the embodiment.

The image forming processing unit 29 forms toner images from the photosensitive drums 9K, 9M, 9C, and 9Y exposed by the writing unit 27 with electrophotography and transfers the toner images onto the recording sheet 4. The image forming processing unit 29 performs correction when having detected positional deviation at the time of printing. The fixing unit 30 fixes the toner images onto the recording sheet 4 by applying heat and pressure to the recording sheet 4 onto which the toner images have been transferred by the image forming processing unit 29 using the fixing unit 16.

The scanning unit 31 converts an image on a document to electric signal. The operating unit 32 displays a state of the image forming apparatus; receives input to the image forming apparatus. The storage unit 33 stores therein a state of the image forming apparatus at one time point. The control unit 34 controls a series of operations on the above-described blocks. Furthermore, the control unit 34 executes various pieces of processing (which will be described in detail later) relating to calculation of a toner consumption amount.

### Memory Selecting Processing when Toner consumption amount is calculated

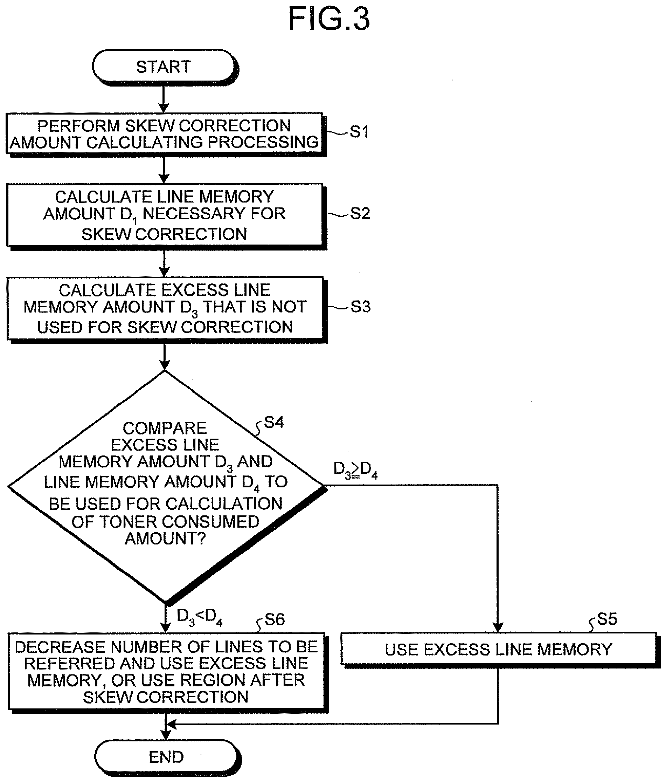

FIG. 3 is a flowchart illustrating processing of selecting a memory to be used when the image forming apparatus in the embodiment calculates a toner consumption amount.

First, the control unit 34 calculates skew correction amounts in generally known procedures (Step S1) . That is to say, the image forming units 6K, 6M, 6C, and 6Y form images of predetermined registration patterns with toners of the respective colors on the conveying belt 5; the registration patterns are detected by the photoelectric sensors 17, 18, and 19; and the control unit 34 calculates skew correction amounts based on the detection output thereof. In this case, the skew correction amounts of M, C, and Y are calculated on the basis of K that has the highest contrast. Note that a color other than K can be set to the basis. Alternatively, an average of all the colors can be set to the basis and all the colors can be adjusted to the average.

Next, the control unit 34 calculates a capacity D₁ of the line memory 28 that is necessary for skew correction of each of M, C, and Y based on the calculated value of the skew correction amount of each of M, C, and Y (Step S2). If the calculated value of the skew correction amount is N₁ lines, the capacity of the line memory that is necessary for skew correction is a capacity that is necessary for storing image data for (N₁+1) lines. That is to say, when the number of pixels on one line of image data of each color is n and the number of bits per pixel is m, a capacity of (N₁+1) × n × m [bits] is needed for skew correction for one color.

Next, the control unit 34 subtracts the capacity D₁ calculated at Step S2 from the entire capacity D₀ of the line memory 28 mounted for skew correction so as to calculate an excess line memory amount D₃ that is not used for the skew correction (Step S3).

Subsequently, the control unit 34 compares the excess line memory amount D₃ and a line memory amount D₄ to be used for calculation of a toner consumption amount with each other (Step S4). Note that the line memory amount D₄ to be used for the calculation of the toner consumption amount is set previously and is stored in the storage unit 33.

If the excess line memory amount D₃ is equal to or larger than the line memory amount D₄ to be used for the calculation of the toner consumption amount as a result of the comparison, the control unit 34 assigns at least a part of the excess line memory amount D₃ to the calculation of the toner consumption amount (Step S5).

On the other hand, if the excess line memory amount D₃ is smaller than the line memory amount D₄ to be used for the calculation of the toner consumption amount as the result of the comparison, the number of lines to be referred to, when the toner consumption amount is calculated, is decreased to set the line memory amount to be used for the calculation of the toner consumption amount to equal to or smaller than the line memory amount D_{3;} and at least a part of the excess line memory amount D₃ is assigned to the calculation of the toner consumption amount, or a region of the line memory for the skew correction after the skew correction is assigned thereto (Step S6). Specific Example in which Line Memory for Skew Correction is assigned to Calculation of Toner consumption amount

Next, assignment of the excess line memory that is executed at Steps S5 and S6 in FIG. 3 is described in detail.

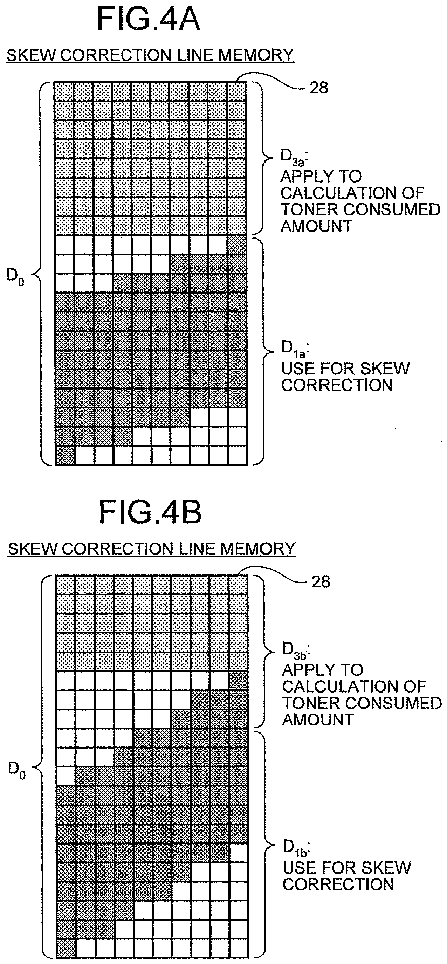

FIGS. 4A and 4B illustrate a state where an excess of the entire capacity D₀ of the line memory 28 mounted for the skew correction is assigned to the calculation of the toner consumption amount. In FIGS. 4A and 4B, each rectangular shape on a grid-like pattern indicates one pixel, the lateral direction indicates the main scanning direction, and the vertical direction indicates the sub scanning direction. That is to say, in FIGS. 4A and 4B, the number of pixels on one line is 10, and a capacity of the line memory 28 mounted for the skew correction is for 20 lines. Accordingly, skew for 19 lines can be corrected.

Furthermore, FIG. 4A illustrates a state where the line memory amount to be used for the skew correction in the entire capacity D₀ (20 lines in the drawing) of the line memory 28 is D₁ₐ (12 lines in the drawing), and an excess line memory amount "D₀ - D₁ₐ" (8 lines in the drawing) obtained by subtracting D₁ₐ from D₀ is the calculation of the toner consumption amount. Furthermore, in FIG. 4B, a line memory amount D_{1b} to be used for the skew correction (15 lines in the drawing) is larger than the line memory amount in FIG. 4A; and therefore, a line memory amount to be used for the calculation of the toner consumption amount is smaller for that amount.

In FIGS. 4A and 4B, points are illustrated on the grids on an area that is applied for the calculation of the toner consumption amount at a predetermined density. This indicates that the grids (dots) are used for storing the image data. In addition, upper and lower ends of a rectangular shape on which points are arranged in grids on the area that is used for the skew correction at a predetermined density are inclined. This indicates that skew generates. That is to say, FIG. 4A indicates that skew for 3 lines generates on a left end and a right end in the main scanning direction, and FIG. 4B indicates that skew for 6 lines generates thereon.

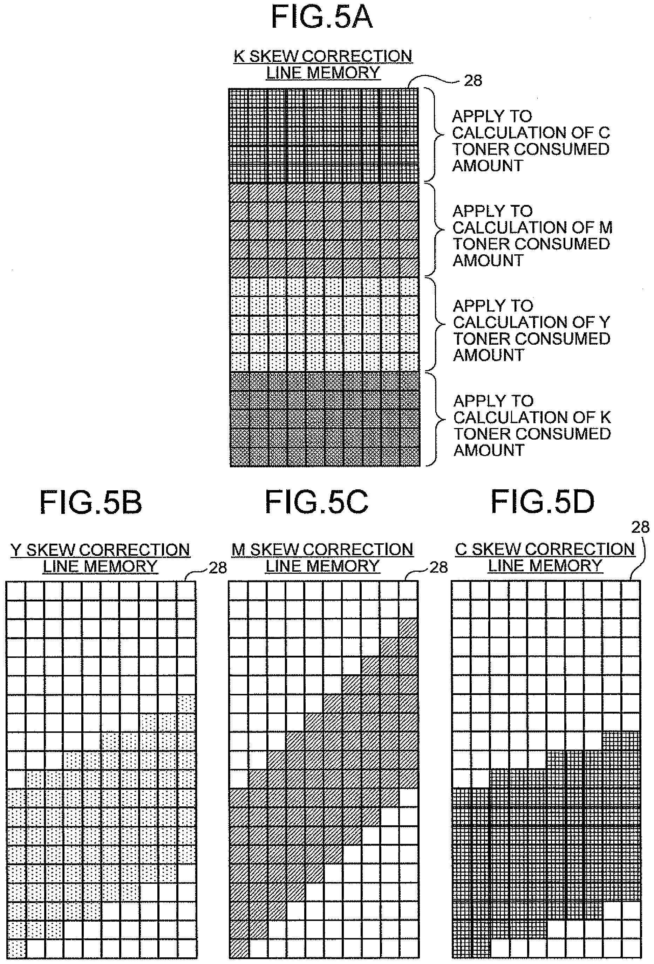

FIGS. 5A to 5D illustrate a state where a color for which skew correction is not performed is K, that is, K is set to a color of basis for the skew correction; the entire capacity of a line memory mounted for the skew correction of K is assigned to calculation of the toner consumption amounts of Y, M, C, and K; and skew correction is performed for Y, M, and C using line memories for the respective colors.

That is to say, as illustrated in FIG. 5A, the line memory for the skew correction of K is assigned to calculation of the toner consumption amounts of Y, M, C, and K. Furthermore, as illustrated in FIG. 5B, FIG. 5C, and FIG. 5D, the line memory for the skew correction of Y, the line memory for the skew correction of M, and the line memory for skew correction of C are used for the skew correction of Y, M, and C, respectively.

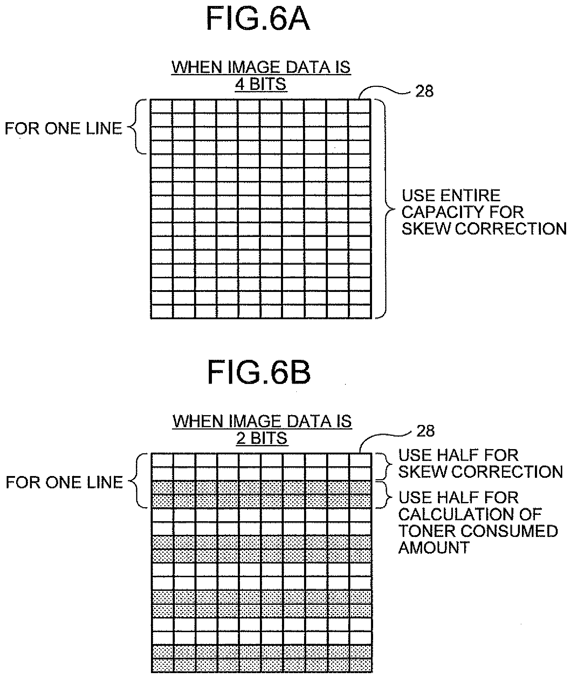

FIGS. 6A and 6B illustrate a state where half of a capacity as an excess is used for the calculation of the toner consumption amount when input image data has 2 bits in a case where the line memory 28 has a storage capacity for the predetermined number of lines of image data having 4 bits per pixel.

That is to say, as illustrated in FIG. 6A, when the entire capacity of the line memory 28 is needed for the skew correction on the image data having 4 bits per pixel, only half of the capacity of the line memory 28 is needed for the skew correction on image data having 2 bits per pixel; and the remaining half becomes excess. The excess is used for the calculation of the toner consumption amount.

In FIGS. 6A and 6B, the excess of the skew correction of the image data having the small number of bits per pixel is used for the calculation of the toner consumption amount. However, an excess is also generated when skew correction is performed on image data having the small number of pixels per line. Therefore, in such a case, the excess can be used for the calculation of the toner consumption amount.

The skew correction and the calculation of the toner consumption amount are executed constantly during image formation. Accordingly, at Step S6 in FIG. 3, the same image data is written both into an area for the skew correction and into an area which is changed for skew calculation from the toner consumption amount on the line memory 28 in parallel for the skew correction; which is other than a case of "using a region after the skew correction". However, the image data to be used for the skew correction and those used for the calculation of the toner consumption amount may not strictly be the same, and may be converted into image data in forms that are easily used for the respective pieces of processing. For example, the image data for the skew correction can be configured to be used as it is; and the image data for calculation of the toner consumption amount can be configured to be processed with y conversion or the like.

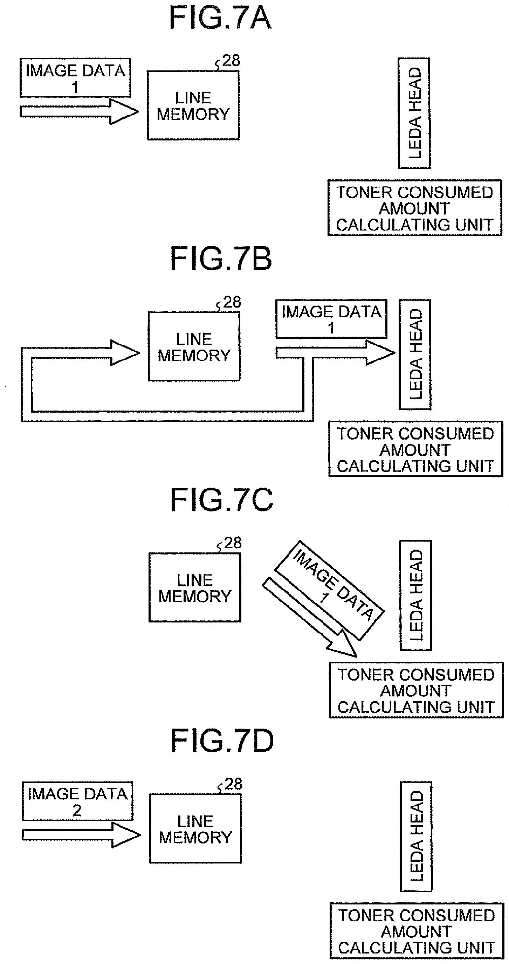

Next, an operation in the case of "using a region after the skew correction" at Step S6 in FIG. 3 is described with reference to FIGS. 7A to 7D.

At first, as illustrated in FIG. 7A, image data 1 is written into the line memory 28. The number of lines of the image data 1 is the number of lines necessary for the skew correction.

When writing of the image data 1 into the line memory 28 has been finished, as illustrated in FIG. 7B, the image data 1 is read from the line memory and is supplied to the LEDA head. The skew correction is performed by the writing/reading. The image data 1 that has been read from the line memory 28 is supplied to the LEDA head and is written into a region of the line memory 28 that has been made available due to the reading out.

Next, as illustrated in FIG. 7C, the image data 1 is read out from the line memory 28 again into a toner consumption amount calculating unit, where a toner consumption amount is calculated thereby. The toner consumption amount calculating unit is a functional block that is realized as a function of the control unit 34.

With the above processing, the skew correction of the image data 1 and the calculation of the toner consumption amount for the image data 1 are finished. Next, as illustrated in FIG. 7D, another image data 2 is written into the line memory. Subsequently, the skew correction and the calculation of a toner consumption amount are processed using the image data 2 in the same manner as the case of the image data 1.

That is to say, in the case of "using a region after the skew correction" at Step S6 in FIG. 3, the LEDA head is made to emit light so as to expose the photosensitive drum based on the image data that has been read from an area for the skew correction on the line memory 28 for the skew correction; and the image data is written into an area of the line memory 28 that has been applied to the calculation of the toner consumption amount again, so as to be used for the calculation of the toner consumption amount.

In this manner, with the image forming apparatus according to the first embodiment, a capacity that is not used for the skew correction on the line memory 28 as a plurality of lines mounted for the skew correction previously is assigned to the calculation of the toner consumption amount. Accordingly, the toner consumption amount can be calculated without using a line memory dedicated to the calculation of the toner consumption amount.

In the above-described embodiment, the toner consumption amount is calculated by only using the line memory for the skew correction without mounting a line memory for the calculation of the toner consumption amount. However, a configuration can be employed in which a line memory for one line for the calculation of the toner consumption amount is mounted and the line memory for the skew correction may be used when the capacity is not insufficient, for example.

### Second Embodiment

### Entire Configuration of Image Forming Apparatus

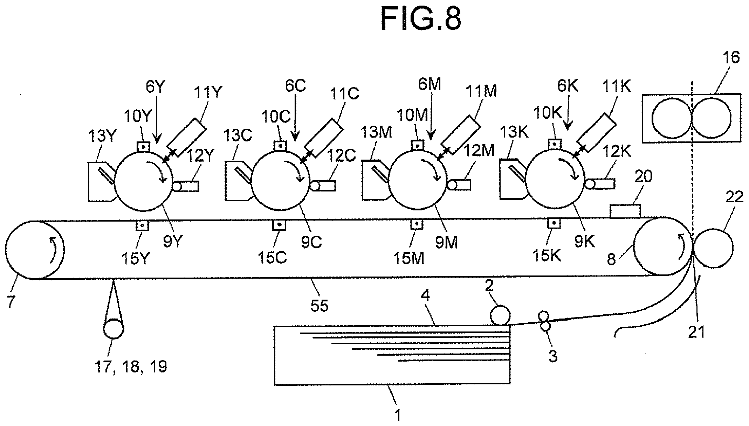

FIG. 8 is a view illustrating the entire configuration of an image forming apparatus according to the second embodiment. In FIG. 8, the same reference numerals as those in FIG. 1 (first embodiment) denote the same or corresponding parts as those in FIG. 1.

As illustrated in the drawing, an endless moving unit is not the conveying belt but an intermediate transfer belt 55. The intermediate transfer belt 55 is an endless belt wound around the driving roller 7 and the driven roller 8 that are driven rotationally.

Toner images of respective colors are transferred onto the intermediate transfer belt 55 by operations of transfer units 15K, 15M, 15C, and 15Y at positions (primary transfer positions) at which the photosensitive drums 9K, 9M, 9C, and 9Y and the intermediate transfer belt 55 make contact with each other. With the transferring, a full-color image on which images with toners of the respective colors are superimposed is formed on the intermediate transfer belt 55.

When an image is formed, the recording sheet 4 housed in the paper feed tray 1 is fed in the order from an uppermost sheet and is conveyed on the intermediate transfer belt 55; and the full-color toner image is transferred onto the recording sheet 4 at a position (secondary transfer position 21) at which the intermediate transfer belt 55 and the recording sheet 4 make contact with each other. A secondary transfer roller 22 is arranged at the secondary transfer position; and the recording sheet 4 is pressed against the intermediate transfer belt 55 so as to enhance transfer efficiency. The secondary transfer roller 22 makes close contact with the intermediate transfer belt 55; and an approach/separation mechanism is not provided. The recording sheet 4 on which a full color superimposed image has been formed is separated from the intermediate transfer belt 55; the image has been fixed by the fixing unit 16; and then, the recording sheet 4 is discharged to the outside of the image forming apparatus.

In the image forming apparatus according to the second embodiment, registration patterns are formed on the intermediate transfer belt 55, and are read by the photoelectric sensors 17, 18, and 19. The functional blocks of the image forming apparatus, the skew correcting function, and the toner consumption amount calculating function are the same as those in the first embodiment (FIG. 2 to FIGS. 7A to 7D), and explanation relating thereto is omitted.

According to the embodiment, a toner consumption amount can be calculated without using a memory dedicated to calculation of the toner consumption amount in an image forming apparatus having a function of correcting skew by controlling writing/reading of image data for a plurality of lines into/from a memory based on a previously calculated skew correction amount and a function of calculating the toner consumption amount of a pixel to which toner adheres among pixels of the image data stored in the memory with reference to pixels on a plurality of peripheral lines.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image forming apparatus comprising:
a skew correcting unit (27, 34) that corrects skew by controlling writing of image data for a plurality of lines into a line memory (28) or reading of image data for a plurality of lines from the line memory (28), the line memory (28) being a buffer memory, based on a skew correction amount that has been calculated previously; **characterized by**
a toner consumption amount calculating unit (34) that refers to pixels on a plurality of peripheral lines among pixels of the image data stored in the memory when a toner consumption amount of a pixel to which toner adheres is calculated; and
a memory assigning unit (34) that assigns a capacity not used for skew correction on the line memory (28) that is mounted for the skew correcting unit (27, 34) to the toner consumption amount calculating unit (34), wherein
the toner consumption amount calculating unit (34) calculates a capacity of the line memory (28) that is necessary for skew correction, subtracts this capacity from the entire capacity of the line memory (28) to calculate an excess line memory amount and compares the excess line memory amount to a predefined line memory amount to be used for the calculation of the toner consumption amount, and
if the excess line memory amount is smaller than the line memory amount to be used for the calculation of the toner consumption amount, the number of lines to be referred to, when the toner consumption amount is calculated, is decreased to set the line memory amount to be used for the calculation of the toner consumption amount to be equal to or smaller than the excess line memory amount.

2. The image forming apparatus according to claim 1, further comprising
a control unit (34) that causes the skew correcting unit (27, 34) and the toner consumption amount calculating unit (34) to operate concurrently.

3. The image forming apparatus according to claim 2, further comprising
a skew correction memory amount calculating unit (34) that calculates a capacity of the line memory (28) necessary for the skew correction based on a previously calculated skew correction amount, wherein
the memory assigning unit assigns the capacity calculated by the skew correction memory amount calculating unit (34) in the entire capacity of the line memory (28) that is mounted previously for the skew correction to the skew correcting unit (27, 34), and assigns a remaining capacity to the toner consumption amount calculating unit (34).

4. The image forming apparatus according to claim 2, further comprising
a color setting unit (34) that sets a color for which skew correction is not performed, wherein
the memory assigning unit assigns a memory that is mounted for the skew correcting unit of the color to toner consumption amount calculating units of the color and other colors.

5. The image forming apparatus according to claim 2, wherein
when a data amount of image data per pixel is smaller than a supposed maximum amount, the memory assigning unit (34) assigns an excess region for the skew correction due to a difference between the data amount and the supposed maximum amount to the toner consumption amount calculating unit (34).

6. The image forming apparatus according to claim 3, further comprising
a line number setting unit (34) that sets the number of lines of image data to be referred to when a toner consumption amount is calculated.

7. The image forming apparatus according to claim 6, wherein
the line number setting unit (34) sets the number of lines such that a capacity necessary for storing image data for the number of lines to be set is equal to or smaller than the remaining capacity.

8. The image forming apparatus according to claim 1, wherein
the memory assigning unit (34) assigns a memory region on which image data has been finished to be read by the skew correcting unit to the toner consumption amount calculating unit.

## Patentansprüche

1. Bilderzeugungsvorrichtung, umfassend:
eine Schräglagenkorrektureinheit (27, 34), die eine Schräglage durch Steuern eines Schreibens von Bilddaten für eine Vielzahl von Zeilen in einen Zeilenspeicher (28) oder Lesen von Bilddaten für eine Vielzahl von Zeilen aus dem Zeilenspeicher (28), wobei der Zeilenspeicher (28) ein Zwischenspeicher ist, auf Grundlage eines Schräglagenkorrekturbetrags, der zuvor berechnet wurde, korrigiert; **gekennzeichnet durch**
eine Tonerverbrauchsmengen-Berechnungseinheit (34), die sich auf Pixel auf einer Vielzahl von peripheren Zeilen aus Pixeln der Bilddaten, die in dem Speicher gespeichert sind, bezieht, wenn eine Tonerverbrauchsmenge eines Pixels, an dem Toner haftet, berechnet wird; und
eine Speicherzuweisungseinheit (34), die eine nicht für Schräglagenkorrektur verwendete Kapazität auf dem Zeilenspeicher (28), der für die Schräglagenkorrektureinheit (27, 34) montiert ist, der Tonerverbrauchsmengen-Berechnungseinheit (34) zuweist, wobei
die Tonerverbrauchsmengen-Berechnungseinheit (34) eine Kapazität des Zeilenspeichers (28), die für Schräglagenkorrektur notwendig ist, berechnet, diese Kapazität von der gesamten Kapazität des Zeilenspeichers (28) subtrahiert, um eine überschüssige Zeilenspeichermenge zu berechnen, und die überschüssige Zeilenspeichermenge mit einer vordefinierten Zeilenspeichermenge, die für die Berechnung der Tonerverbrauchsmenge verwendet werden soll, vergleicht und
wenn die überschüssige Zeilenspeichermenge kleiner ist als die Zeilenspeichermenge, die für die Berechnung der Tonerverbrauchsmenge verwendet werden soll, die Anzahl von Zeilen, auf die Bezug genommen werden soll, wenn die Tonerverbrauchsmenge berechnet wird, verringert wird, um die Zeilenspeichermenge, die für die Berechnung der Tonerverbrauchsmenge verwendet werden soll, so festzulegen, dass sie gleich oder kleiner als die überschüssige Zeilenspeichermenge ist.

2. Bilderzeugungsvorrichtung nach Anspruch 1, ferner umfassend:
eine Steuereinheit (34), die die Schräglagenkorrektureinheit (27, 34) und die Tonerverbrauchsmengen-Berechnungseinheit (34) dazu veranlasst, gleichzeitig zu arbeiten.

3. Bilderzeugungsvorrichtung nach Anspruch 2, ferner umfassend:
eine Schräglagenkorrektur-Speichermengen-Berechnungseinheit (34), die eine Kapazität des Zeilenspeichers (28), die für die Schräglagenkorrektur notwendig ist, auf Grundlage eines zuvor berechneten Schräglagenkorrekturbetrags berechnet, wobei
die Speicherzuweisungseinheit die Kapazität, die durch die Schräglagenkorrektur-Speichermengen-Berechnungseinheit (34) berechnet wird, in der gesamten Kapazität des Zeilenspeichers (28), der zuvor für die Schräglagenkorrektur montiert wurde, der Schräglagenkorrektureinheit (27, 34) zuweist und eine verbleibende Kapazität der Tonerverbrauchsmengen-Berechnungseinheit (34) zuweist.

4. Bilderzeugungsvorrichtung nach Anspruch 2, ferner umfassend:
eine Farbeinstelleinheit (34), die eine Farbe, für die Schräglagenkorrektur nicht durchgeführt wird, festlegt, wobei
die Speicherzuweisungseinheit einen Speicher, der für die Schräglagenkorrektureinheit der Farbe montiert ist, Tonerverbrauchsmengen-Berechnungseinheiten der Farbe und anderer Farben zuweist.

5. Bilderzeugungsvorrichtung nach Anspruch 2, wobei
wenn eine Datenmenge von Bilddaten pro Pixel kleiner ist als eine vorgeschlagene maximale Menge, die Speicherzuweisungseinheit (34) einen überschüssigen Bereich für die Schräglagenkorrektur aufgrund einer Differenz zwischen der Datenmenge und der vorgeschlagenen maximalen Menge der Tonerverbrauchsmengen-Berechnungseinheit (34) zuweist.

6. Bilderzeugungsvorrichtung nach Anspruch 3, ferner umfassend:
eine Zeilenanzahl-Einstelleinheit (34), die die Anzahl von Zeilen von Bilddaten, auf die Bezug genommen werden soll, wenn eine Tonerverbrauchsmenge berechnet wird, festlegt.

7. Bilderzeugungsvorrichtung nach Anspruch 6, wobei
die Zeilenanzahl-Einstelleinheit (34) die Anzahl von Zeilen derart festlegt, dass eine Kapazität, die zum Speichern von Bilddaten für die Anzahl von Zeilen, die festgelegt werden soll, notwendig ist, gleich oder kleiner als die verbleibende Kapazität ist.

8. Bilderzeugungsvorrichtung nach Anspruch 1, wobei
die Speicherzuweisungseinheit (34) einen Speicherbereich, auf dem Bilddaten fertiggestellt wurden, um durch die Schräglagenkorrektureinheit gelesen zu werden, der Tonerverbrauchsmengen-Berechnungseinheit zuweist.

## Revendications

1. Appareil de formation d'image comprenant :
une unité de correction d'obliquité (27, 34) qui corrige l'obliquité par la commande de l'écriture de données image pour une pluralité de lignes dans une mémoire de ligne (28) ou la lecture de données image pour une pluralité à partir de la mémoire de ligne (28), la mémoire de ligne (28) constituant une mémoire tampon, en fonction d'une quantité de correction d'obliquité qui a été calculée précédemment ; **caractérisé par**
une unité de calcul de quantité de consommation de toner (34) qui se rapporte à des pixels sur une pluralité de lignes périphériques parmi des pixels de données image stockées dans la mémoire lorsqu'une quantité de consommation de toner d'un pixel auquel le toner adhère est calculée ; et
une unité d'attribution de mémoire (34) qui attribue une capacité non utilisée pour une correction d'obliquité sur la mémoire de ligne (28) qui est montée pour l'unité de correction d'obliquité (27, 34) à l'unité de calcul de quantité de consommation de toner (34),
l'unité de calcul de quantité de consommation de toner (34) calculant une capacité de la mémoire de ligne (28) qui est nécessaire pour la correction d'obliquité, soustrayant cette capacité à la capacité entière de la mémoire de ligne (28) à calculer une quantité de mémoire de ligne excédentaire et comparant la quantité de mémoire de ligne excédentaire à une quantité de mémoire de ligne prédéfinie à utiliser pour le calcul de la quantité de consommation de toner, et
si la quantité de mémoire de ligne excédentaire est inférieure à la quantité de mémoire de ligne à utiliser pour le calcul de la quantité de consommation de toner, le nombre de lignes auquel on doit se rapporter, lorsque la quantité de consommation de toner est calculée, est diminué pour définir la quantité de mémoire de ligne à utiliser pour le calcul de la quantité de consommation de toner comme étant égale ou inférieure à la quantité de mémoire de ligne excédentaire.

2. Appareil de formation d'image selon la revendication 1, comprenant en outre une unité de commande (34) qui amène l'unité de correction d'obliquité (27, 34) et l'unité de calcul de quantité de consommation de toner (34) à fonctionner simultanément.

3. Appareil de formation d'image selon la revendication 2, comprenant en outre
une unité de calcul de quantité de mémoire de correction d'obliquité (34) qui calcule une capacité de la mémoire de ligne (28) nécessaire pour la correction d'obliquité en fonction d'une quantité de correction d'obliquité calculée précédemment,
l'unité d'attribution de mémoire attribuant la capacité calculée par l'unité de calcul de quantité de mémoire de correction d'obliquité (34) dans la capacité entière de la mémoire de ligne (28) qui est montée précédemment pour la correction d'obliquité à l'unité de correction d'obliquité (27, 34), et attribuant une capacité restante à l'unité de calcul de quantité de consommation de toner (34).

4. Appareil de formation d'image selon la revendication 2, comprenant en outre
une unité de définition de couleur (34) qui définit une couleur pour laquelle une correction d'obliquité n'est pas effectuée,
l'unité d'attribution de mémoire attribuant une mémoire qui est montée pour l'unité de correction d'obliquité de la couleur à des unités de calcul de quantité de consommation de toner de la couleur et d'autres couleurs.

5. Appareil de formation d'image selon la revendication 2, dans lequel
lorsqu'une quantité de données de données image par pixel est inférieure à une quantité maximale supposée, l'unité d'attribution de mémoire (34) attribue une région excédentaire pour la correction d'obliquité due à une différence entre la quantité de données et la quantité maximale supposée à l'unité de calcul de quantité de consommation de toner (34).

6. Appareil de formation d'image selon la revendication 3, comprenant en outre
une unité de définition de nombre de lignes (34) qui définit le nombre de lignes de données image auxquelles on doit se rapporter lorsqu'une quantité de consommation de toner est calculée.

7. Appareil de formation d'image selon la revendication 6, dans lequel
l'unité de définition de nombre de lignes (34) définit le nombre de lignes de manière qu'une capacité nécessaire au stockage de données image pour le nombre de lignes à définir est égale ou inférieure à la capacité restante.

8. Appareil de formation d'image selon la revendication 1, dans lequel
l'unité d'attribution de mémoire (34) attribue une région de mémoire sur laquelle des données image ont fini d'être lues par l'unité de correction d'obliquité à l'unité de calcul de quantité de consommation de toner.
